# EUROPEAN PATENT APPLICATION

(11) **EP 1 845 716 A2**
(43) Date of publication of application: **17.10.2007**
(21) Application number: 07105541.2
(22) Date of filing: 03.04.2007
(51) Int. Cl.: H04N 5/44

(54) **VBI Data slice circuit**

(30) Priority: 12.04.2006 JP 2006109900
(71) Applicant: MATSUSHITA ELECTRIC INDUSTRIAL CO., LTD, Kadoma-shi, Osaka 571-8501 (JP)
(72) Inventor: Iinuma, Takaaki, c/o Matsushita Electric Industrial Co. Ltd.,, 3-7-1 shiromi, Chuo-ku, Osaka-shi, Osaka 540-6319 (JP); Takada, Satoshi, c/o Matsushita Electric Industrial Co. Ltd.,, 3-7-1 shiromi, Chuo-ku, Osaka-shi, Osaka 540-6319 (JP)
(74) Representative: Zimmer, Franz-Josef

(57) **Abstract**

An extraction cycle detection unit detects an extraction cycle of VBI data based on a CRI amplitude of a CVBS signal and a pedestal level detection unit detects a pedestal level value of the CVBS signal. A MAX detection unit detects a maximum value of the CRI amplitude. The maximum value of the CRI amplitude and the pedestal level value are supplied to an operation unit to execute an operation to obtain an average value of them, which is input to a data slice unit as a slice level. The data slice unit extracts the VBI data based on the slice level and the extraction cycle from the extraction cycle detection unit. Even if the CRI waveform of the CVBS signal becomes irregular, the slice level is suitably determined and the VBI data is properly extracted.

## Description

### CROSS-REFERENCE TO RELATED APPLICATION

This non-provisional application claims priority under 35 U.S.C. §119(a) of Patent Application No. 2006-109900 filed in Japan on April 12, 2006, the entire contents of which are hereby incorporated by reference.

### BACKGROUND OF THE INVENTION

### 1. Field of the Invention

The present invention relates to a VBI (Vertical Blanking Interval) data slice circuit for extracting VBI data which is superimposed on a VBI of a video signal.

### 2. Description of Related Art

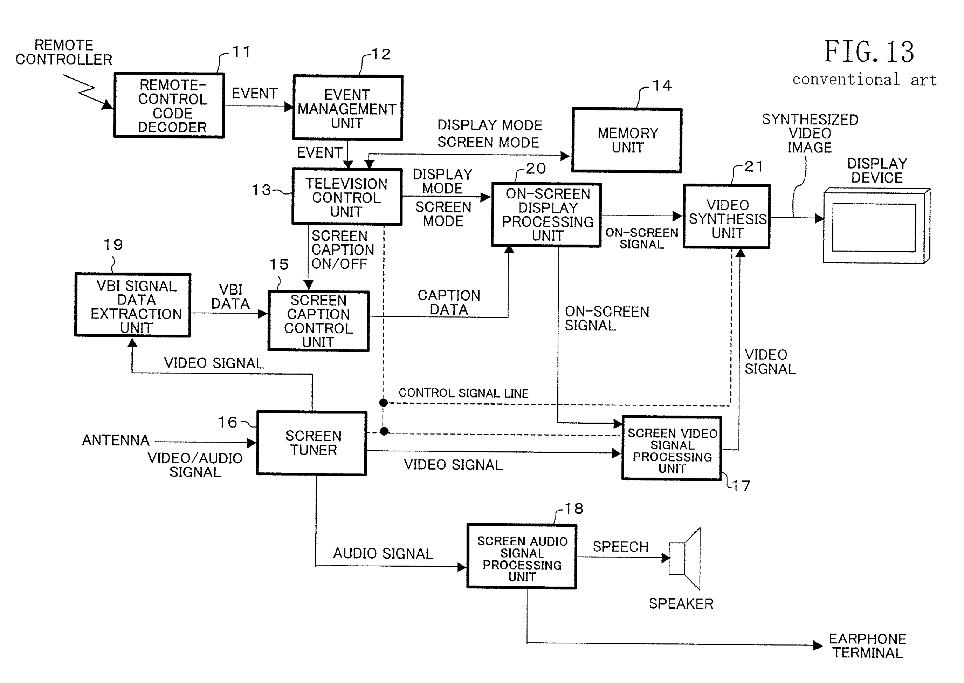

For example, a conventional television receiver system has a circuit configuration shown in Figure **13.** Figure **13** is a block diagram illustrating the entire configuration of the conventional television receiver system.

In the conventional television receiver system shown in the diagram, a screen tuner **16** receives a video/audio signal from an antenna. The audio signal is processed in a screen audio signal processing unit **18** and the video signal is sent to a VBI signal data extraction unit **19** to extract VBI data therefrom. Then, a screen caption control unit **15** creates caption data based on the VBI data extracted by the VBI signal data extraction unit **19** and an on-screen display processing unit **20** converts the caption data to an on-screen signal.

The video signal from the screen tuner **16** and the on-screen signal from the on-screen display processing unit **20** are processed in a screen video signal processing unit **17.** Then, the video signal from the screen video signal processing unit **17** and the on-screen signal from the on-screen display processing unit **20** are synthesized by a video synthesis unit **21.** A synthesized signal from the video synthesis unit **21** is input to a display device such as a television set to display a video image synthesized with the caption data.

The conventional television receiver system is controlled by a television control unit **13,** from which a control signal is supplied to the screen tuner **16,** the screen video signal processing unit **17** and the video synthesis unit **21.**

The conventional television receiver system further includes a remote-control code decoder **11** for decoding a code sent from a remote-controller operated by a user, an event management unit **12** for giving instructions to the television control unit **13** in response to an event input from the remote-control code decoder **11** and a memory unit **14** for storing the current mode.

Japanese Unexamined Patent Publication No. S62-84687 discloses an example of the conventional VBI signal data extraction unit **19.**

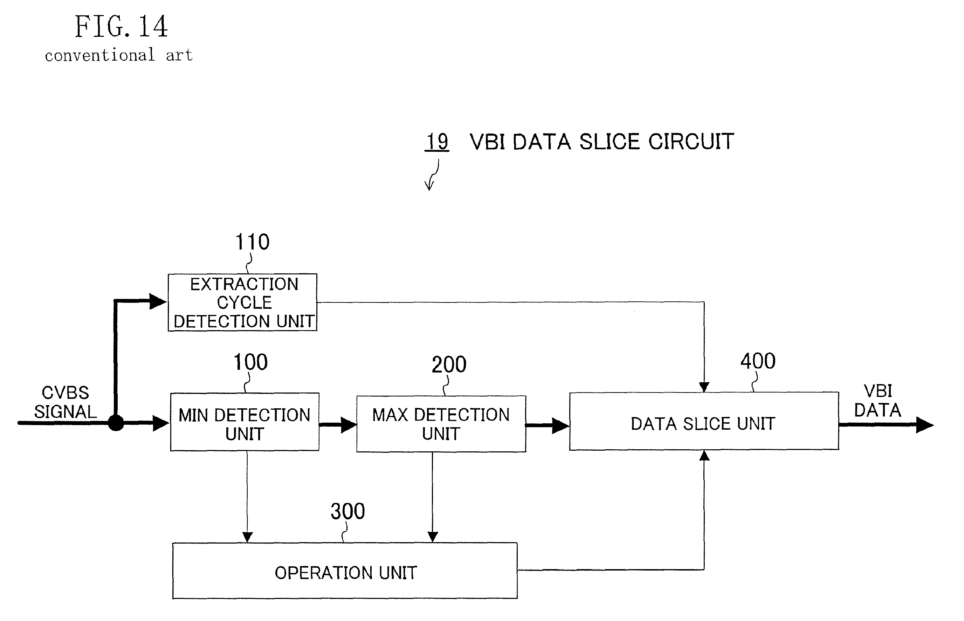

Figure **14** is a block diagram illustrating the entire configuration of the VBI data slice circuit **19** according to Japanese Unexamined Patent Publication No. S62-84687. Referring to the diagram, when a CVBS (Composite Video Burst Signal, hereinafter referred to as a CVBS signal) as the video signal is supplied to the VBI data slice circuit **19,** the CVBS signal is input to an extraction cycle detection unit **110** and a MIN detection unit **100.** The extraction cycle detection unit **110** detects a cycle of VBI data extraction based on the amplitude of CRI (Clock Run In) of the CVBS signal and inputs the detected extraction cycle to a data slice unit **400.** The MIN detection unit **100** detects a minimum value of the CRI amplitude and supplies the detected minimum value to an operation unit **300** as a MIN value. The CVBS signal supplied to the MIN detection unit **100** is input to a MAX detection unit **200** subsequent to the MIN detection unit **100.** The MAX detection unit **200** detects a maximum value of the CRI amplitude and supplies the detected maximum value to the operation unit **300** as a MAX value. The operation unit **300** performs an operation to obtain an average value of the MIN value from the MIN detection unit **100** and the MAX value from the MAX detection unit **200** and inputs the average value to the data slice unit **400.** In the data slice unit **400,** the average value input from the operation unit **300** is set as a slice level and the VBI data superimposed after the CRI of the CVBS signal is binarized into "0" and "1" based on the extraction cycle input from the extraction cycle detection unit **110.**

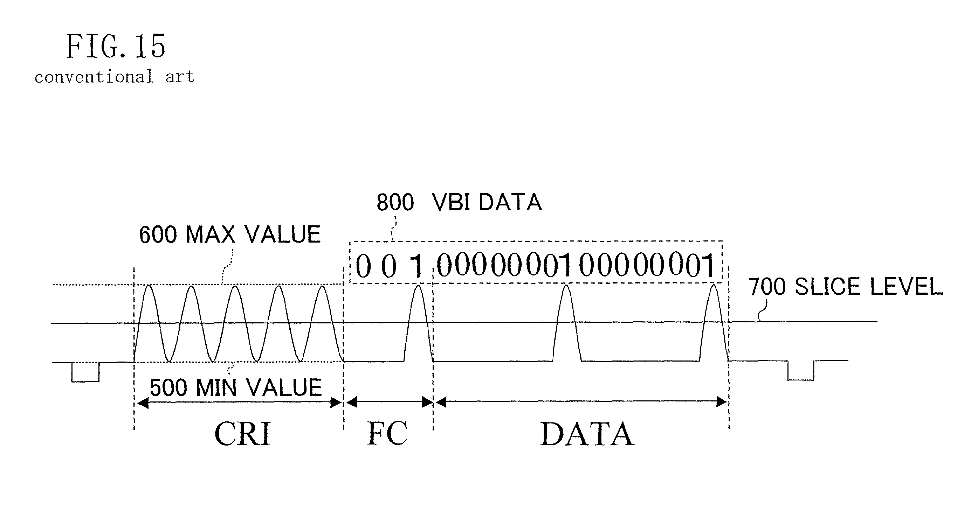

Figure **15** is a schematic diagram illustrating how the VBI data is extracted in the conventional VBI data slice circuit **19.**

The MIN detection unit **100** and the MAX detection unit **200** shown in Figure **14** detect a MIN value **500** and a MAX value **600** of the CRI of the CVBS signal, respectively. The operation unit **300** performs an operation to obtain an average value of the MIN value **500** and the MAX value **600** and inputs the operation result to the data slice unit **400.** In the data slice unit **400,** the average value obtained in the operation unit **300** is set as a slice level **700** such that VBI data **800** including FC (framing code) and DATA (data) is extracted from the CVBS signal based on the extraction cycle detected in the extraction cycle detection unit **110.** As shown in Figure **15,** the VBI data **800** is expressed in a binary form with "0" and "1" using the slice level **700** as a threshold value.

According to the technique disclosed by Japanese Unexamined Patent Publication No. S62-84687, the minimum and maximum values of the CRI amplitude are detected and the average value of them is set as the slice level to extract the VBI data. Therefore, if the CRI waveform becomes irregular due to ghost, noise and the like, the minimum and maximum values are not precisely detected. As a result, the slice level is not suitably determined and the VBI data is not properly extracted. Further, since the VBI data extraction cycle is detected based on the CRI amplitude, the extraction cycle is not suitably set when the CRI waveform becomes irregular. This makes it difficult to extract the VBI data appropriately.

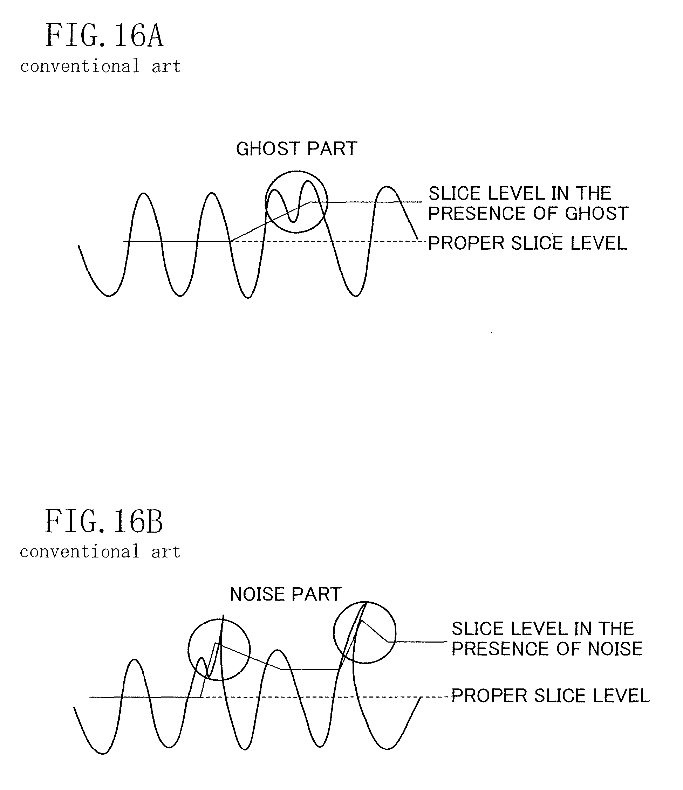

For example, as shown in Figure **16A,** if the minimum value detection is carried out at a ghost part, a value higher than the normal minimum value is recognized as the minimum value and determined as the slice level. As a result, the slice level may possibly become higher than the normal slice level. Likewise, if the maximum value detection is carried out at a noise part as shown in Figure **16B**, a value higher than the normal maximum value is recognized as the maximum value and the slice level may possibly become higher than the normal slice level.

### SUMMARY OF THE INVENTION

The present invention has been achieved in view of the above-described problem. An object of the invention is to properly extract VBI data by suitably setting a slice level and an extraction cycle even if a CRI waveform of a CVBS signal becomes irregular.

In order to achieve the object, with respect to a VBI data slice circuit for extracting VBI data from a CVBS signal using a threshold value as a slice level, the present invention adopts a circuit configuration which makes it possible to determine the slice level from information less susceptible to ghost and noise and correct the extracted information and the determined slice level.

To be more specific, the VBI data slice circuit of the present invention is a VBI data slice circuit for extracting VBI data superimposed on a VBI of a CVBS signal based on a slice level. The VBI data slice circuit includes: an extraction cycle detection unit for detecting an extraction cycle of the VBI data from the CVBS signal; a pedestal level detection unit for detecting a pedestal level value of the CVBS signal; a MAX detection unit for detecting a maximum value of an amplitude of the CVBS signal; an operation unit for performing an operation to obtain the slice level for the VBI data based on the pedestal level value detected by the pedestal level detection unit and the maximum value of the amplitude detected by the MAX detection unit; and a data slice unit for extracting the VBI data from the CVBS signal based on the extraction cycle detected by the extraction cycle detection unit and the slice level obtained by the operation unit.

Another VBI data slice circuit of the present invention is a VBI data slice circuit for extracting VBI data superimposed on a VBI of a CVBS signal based on a slice level. The VBI data slice circuit includes: a pedestal level detection unit for detecting a pedestal level value of the CVBS signal; a MAX detection unit for detecting a maximum value of an amplitude of the CVBS signal; a MAX cycle detection unit for detecting an extraction cycle of the VBI data from a detection cycle of the maximum value of the amplitude detected by the MAX detection unit; an operation unit for performing an operation to obtain the slice level for the VBI data based on the pedestal level value detected by the pedestal level detection unit and the maximum value of the amplitude detected by the MAX detection unit; and a data slice unit for extracting the VBI data from the CVBS signal based on the extraction cycle detected by the MAX cycle detection unit and the slice level obtained by the operation unit.

Another VBI data slice circuit of the present invention is a VBI data slice circuit for extracting VBI data superimposed on a VBI of a CVBS signal based on a slice level. The VBI data slice circuit includes: an extraction cycle detection unit for detecting an extraction cycle of the VBI data from the CVBS signal; a MIN detection unit for detecting a minimum value of an amplitude of the CVBS signal; a MAX detection unit for detecting a maximum value of the amplitude of the CVBS signal; an amplitude judgment unit for judging whether or not the minimum value of the amplitude detected by the MIN detection unit and the maximum value of the amplitude detected by the MAX detection unit are useable for an operation to obtain the slice level; an operation unit for performing the operation to obtain the slice level for the VBI data based on the minimum and maximum values of the amplitude which are judged as being usable for the operation to obtain the slice level; and a data slice unit for extracting the VBI data from the CVBS signal based on the extraction cycle detected by the extraction cycle detection unit and the slice level obtained by the operation unit.

According to the above-described configuration, the present invention includes the pedestal level detection unit as an alternative of the MIN detection unit. The pedestal level detection unit detects a pedestal level value which is less susceptible to the ghost and noise than the minimum value of the CRI amplitude. Therefore, even if the detected minimum value of the CRI amplitude is not appropriate because of the influence of the ghost, the slice level is suitably determined without any problem.

Further, the present invention includes the MAX cycle detection unit as an alternative of the extraction cycle detection unit such that a cycle of VBI data slicing is determined from the maximum value of the CRI amplitude. Therefore, even if the cycle of the CRI amplitude is not appropriately detected because of the influence of the ghost, the extraction cycle is suitably determined without any problem.

Still further, the present invention additionally includes the amplitude judgment unit such that it judges whether or not the minimum value detected by the MIN detection unit and the maximum value detected by the MAX detection unit are usable for setting the slice level based on the difference in displacement between the minimum and maximum values of the CRI amplitude. Therefore, even if the CRI amplitude becomes irregular because of the influence of the ghost, the slice level is suitably determined from the proper minimum or maximum value.

### BRIEF DESCRIPTION OF THE DRAWINGS

Figure **1** is a block diagram illustrating the entire configuration of a VBI data slice circuit according to a first example of the present invention.
Figure **2** is a schematic diagram illustrating how the VBI data is extracted in the VBI data slice circuit of Figure **1.**
Figure **3** is a block diagram illustrating the entire configuration of a VBI data slice circuit according to a second example of the present invention.
Figure **4A** is a schematic diagram illustrating how the VBI data is extracted in a conventional VBI data slice circuit and Figure **4B** is a schematic diagram illustrating how the VBI data is extracted in the VBI data slice circuit of Figure **3.**
Figure **5** is a block diagram illustrating the entire configuration of a VBI data slice circuit according to a third example of the present invention.
Figure **6** is a schematic diagram illustrating how the VBI data is extracted in the VBI data slice circuit of Figure **5.**
Figure **7** is a block diagram illustrating the entire configuration of a VBI data slice circuit according to a fourth example of the present invention.
Figure **8** is a schematic diagram illustrating how the VBI data is extracted from the VBI data slice circuit of Figure **7.**
Figure **9** is a block diagram illustrating the entire configuration of a VBI data slice circuit according to a fifth example of the present invention.
Figure **10** is a schematic diagram illustrating how the VBI data is extracted in the VBI data slice circuit of Figure **9.**
Figure **11** is a block diagram illustrating the entire configuration of a VBI data slice circuit according to a sixth example of the present invention.
Figure **12A** is a diagram illustrating how a slice level is set in an odd number field of a CVBS signal in the VBI data slice circuit of Figure **11** and Figure **12B** is a diagram illustrating how the slice level is set in an even number field of the CVBS signal and how the VBI data is extracted in the VBI data slice circuit of Figure **11.**
Figure **13** is a block diagram illustrating the entire configuration of a conventional television receiver system.
Figure **14** is a block diagram illustrating the entire configuration of a conventional VBI data slice circuit.
Figure **15** is a schematic diagram illustrating how the VBI data is extracted in the conventional VBI data slice circuit.
Figure **16A** is a diagram illustrating a CRI amplitude of the CVBS signal which is made irregular by the influence of ghost and Figure **16B** is a diagram illustrating the CRI amplitude of the CVBS signal which is made irregular by the influence of noise.

### DETAILED DESCRIPTION OF THE INVENTION

Hereinafter, explanation of preferred examples of the present invention is provided with reference to the attached drawings.

### (First Example)

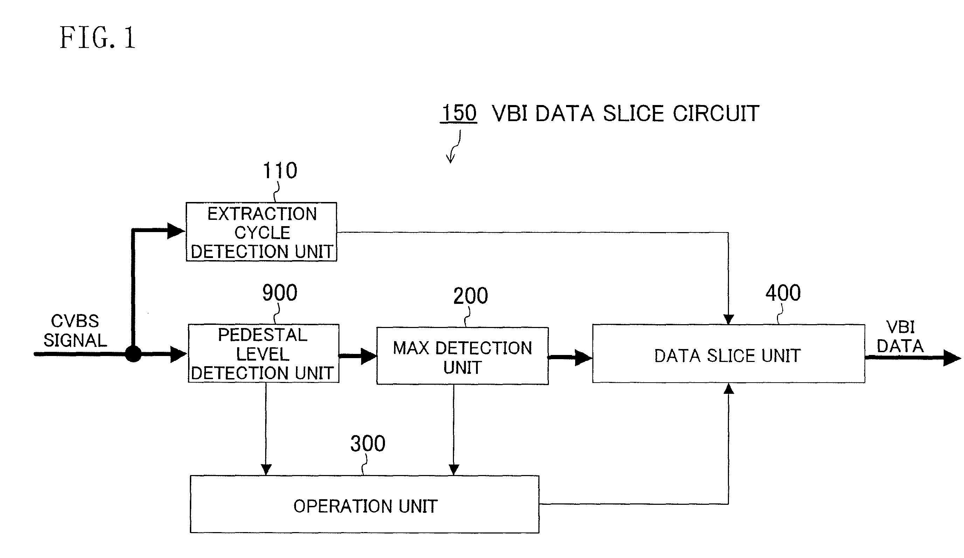

Figure **1** is a block diagram illustrating the entire configuration of a VBI data slice circuit according to a first example of the present invention.

Referring to the diagram, a VBI data slice circuit **150** includes an extraction cycle detection unit **110,** a MAX detection unit **200,** an operation unit **300,** a data slice unit **400** and a pedestal level detection unit **900.** Detailed explanation of the components other than the pedestal level detection unit **900** is omitted because their configurations are the same as those of the conventional art shown in Figure **14.**

When a CVBS signal is supplied to the VBI data slice circuit **150,** the CVBS signal is input to the extraction cycle detection unit **110** and the pedestal level detection unit **900.** The extraction cycle detection unit **110** detects an extraction cycle of VBI data based on the CRI amplitude of the CVBS signal and inputs the extraction cycle to the data slice unit **400.**

The pedestal level detection unit **900** detects a pedestal level value (a value at a black level of a video signal) of the CVBS signal and supplies the detected pedestal level value to the operation unit **300.** The CVBS signal supplied to the pedestal level detection unit **900** is input to the MAX detection unit **200** subsequent to the pedestal level detection unit **900,** in which a maximum value of the CRI amplitude is detected and supplied to the operation unit **300** as a MAX value.

The operation unit **300** performs an operation to obtain an average value of the pedestal level value from the pedestal level detection unit **900** and the MAX value from the MAX detection unit **200** and inputs the average value to the data slice unit **400** as a slice level. Then, based on the slice level input from the operation unit **300** and the extraction cycle input from the extraction cycle detection unit **110,** the data slice unit **400** binarizes the VBI data superimposed after the CRI of the CVBS signal into "0" and "1" and extracts the binarized data.

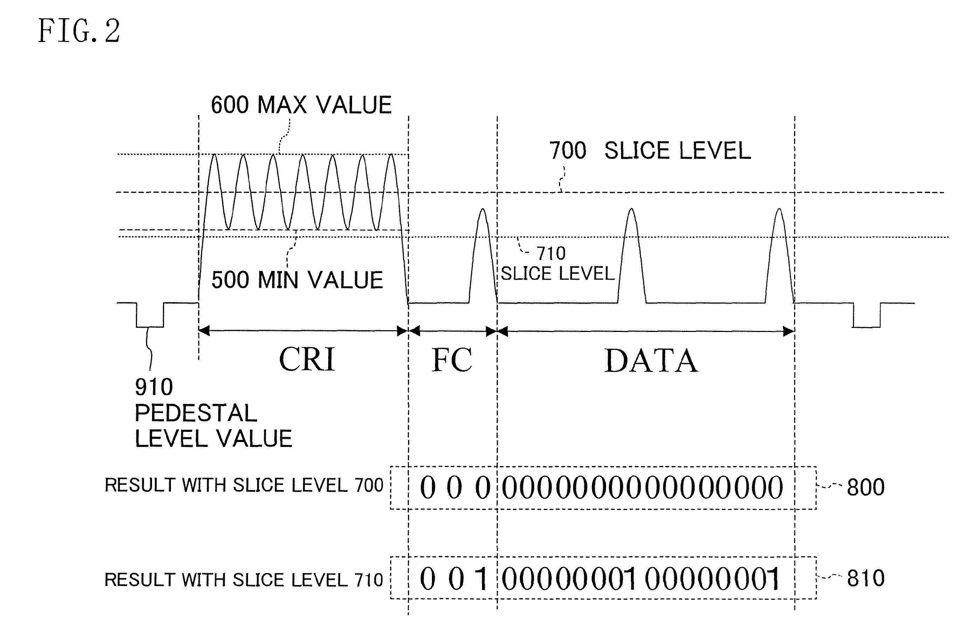

Figure **2** is a schematic diagram illustrating how the VBI data is extracted in the VBI data slice circuit **150** of the first example of the present invention.

The pedestal level detection unit **900** and the MAX detection unit **200** shown in Figure **1** detect a pedestal level value **910** of the CVBS signal and a MAX value **600** of the CRI of the CVBS signal, respectively. The operation unit **300** performs an operation to obtain an average value of the pedestal level value **910** and the MAX value **600** and inputs the average value to the data slice unit **400** as a slice level **710.** Then, based on the slice level **710** obtained in the operation unit **300** and the extraction cycle input from the extraction cycle detection unit **110,** the data slice unit **400** extracts VBI data **810** from the CVBS signal. As shown in Figure **2,** if the conventional VBI data slice circuit (Figure **14)** is used, the average value of the MIN value **500** and the MAX value **600** is used as the slice level **700** to extract the VBI data **800.** In this case, the data extraction is not properly carried out.

If a low-pass filter is provided in front of the VBI data slice circuit in consideration of a fringe area, the amplitude of the CVBS signal as the video signal is reduced and the CRI amplitude of the CVBS signal becomes small. As a result, the amplitude is maintained at a high level and the MIN value **500** is not reduced to the same level as the pedestal level value **910.** Thus, with use of the conventional VBI data slice circuit, the slice level **700** is set high and the VBI data **800** is falsely extracted. In the VBI data slice circuit **150** of the present example, however, the slice level **710** is determined by the average value of the MAX value **600** of the CRI and the pedestal level value **910** without using the MIN value **500.** Therefore, the above-described problem is avoided and the VBI data **810** is properly extracted.

As described above, even if the minimum value of the CRI amplitude is not appropriately detected due to the presence of the low-pass filter forward of the VBI data slice circuit, the VBI data slice circuit of the present example makes it possible to suitably set the slice level and properly extract the VBI data.

### (Second Example)

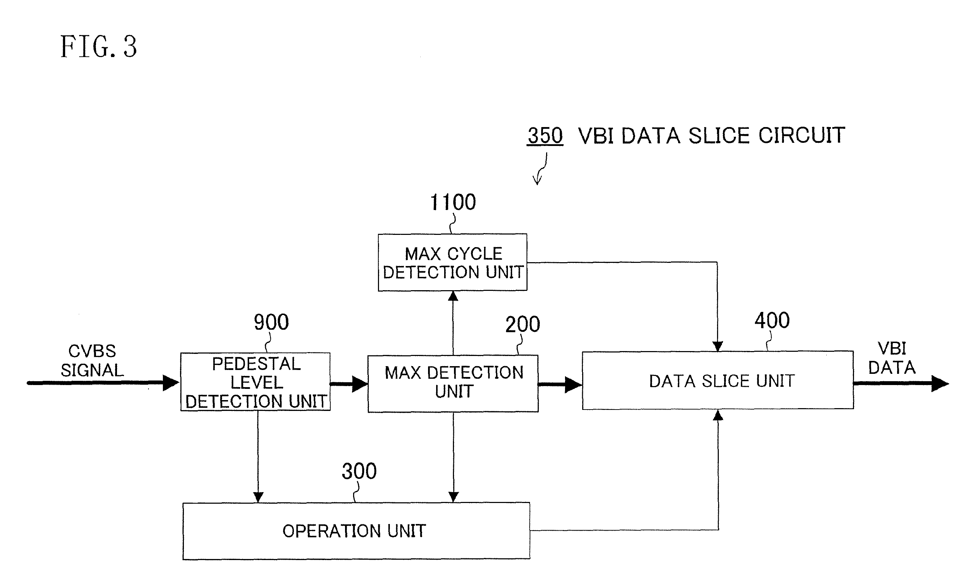

Figure **3** is a block diagram illustrating the entire configuration of a VBI data slice circuit according to a second example of the present invention.

Referring to the diagram, a VBI data slice circuit **350** includes a MAX detection unit **200,** an operation unit **300,** a data slice unit **400,** a pedestal level detection unit **900** and a MAX cycle detection unit **1100.** Detailed explanation of the components other than the MAX cycle detection unit **1100** is omitted because their configurations are the same as those of the conventional art of Figure **14** and the first example of Figure **1.**

The MAX cycle detection unit **1100** detects an extraction cycle of the VBI data based on the detection cycle of the maximum value of the CRI amplitude detected by the MAX detection unit **200** and inputs the detected extraction cycle to the data slice unit **400.**

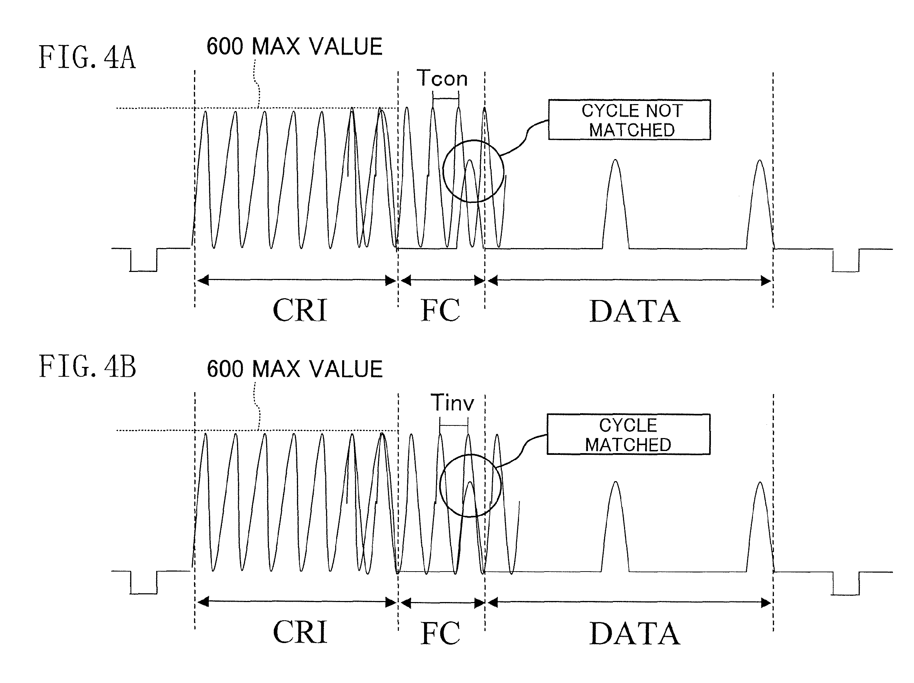

Figure **4A** is a schematic diagram illustrating how the extraction cycle is detected in the conventional VBI data slice circuit **19** and Figure **4B** is a schematic diagram illustrating how the extraction data is detected in the VBI data slice circuit **350** according to the second example of the present invention.

In the MAX cycle detection unit **1100** shown in Figure **3,** an extraction cycle Tᵢₙᵥ shown in Figure **4B** is detected based on the detection cycle of the maximum value of the CRI of the CVBS signal detected by the MAX detection unit **200.** Referring to Figure **4A,** when an extraction cycle T_{con} is detected based on the maximum and minimum values of the CRI of the CVBS signal in the conventional VBI data slice circuit shown in Figure **14,** and if a filter is provided in front of the VBI data slice circuit in consideration of a fringe area, the falling edge of the CRI of the CVBS signal becomes steep and the CRI cycle is not properly detected. Therefore, when the extraction cycle T_{con} is detected in the conventional VBI data slice circuit, the extraction cycle of the VBI data becomes irregular and misaligned with the FC and DATA cycles. In this case, the VBI data is not properly extracted.

In the VBI data slice circuit **350** of the present example, the phase of the entire CRI cycle is not adjusted, but the VBI data is extracted based on the cycle of the MAX value detected by the MAX detection unit **200.** Therefore, the above-described problem is avoided and the VBI data is properly extracted.

As described above, with the VBI data slice circuit of the present example, the extraction cycle is suitably determined and the VBI data is properly extracted even if the CRI cycle becomes irregular under the influence of the ghost.

### (Third Example)

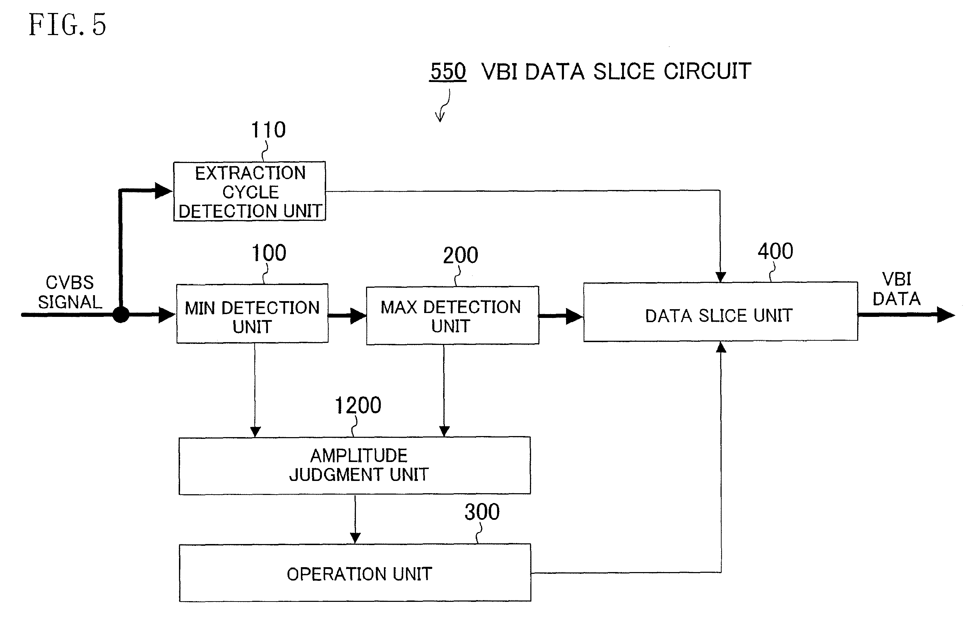

Figure 5 is a block diagram illustrating the entire configuration of a VBI data slice circuit according to a third example of the present invention.

Referring to the diagram, a VBI data slice circuit **550** includes a MIN detection unit **100,** an extraction cycle detection unit **110,** a MAX detection unit **200,** an operation unit **300,** a data slice unit **400** and an amplitude judgment unit **1200.** Detailed explanation of the components other than the amplitude judgment unit **1200** is omitted because their configurations are the same as those of the prior art shown in Figure **14.**

When a difference in displacement between the MIN value detected by the MIN detection unit **100** and the MAX value detected by the MAX detection unit **200** is lower than a predetermined difference in displacement, the amplitude judgment unit **1200** does not allow the input of the MIN and MAX values to the operation unit **300.** If the amplitude judgment unit **1200** judges that the difference in displacement between the MIN and MAX values is not lower than the predetermined difference in displacement, the MIN and MAX values are input to the operation unit **300,** in which an operation is performed to obtain an average value of them and the slice level is determined.

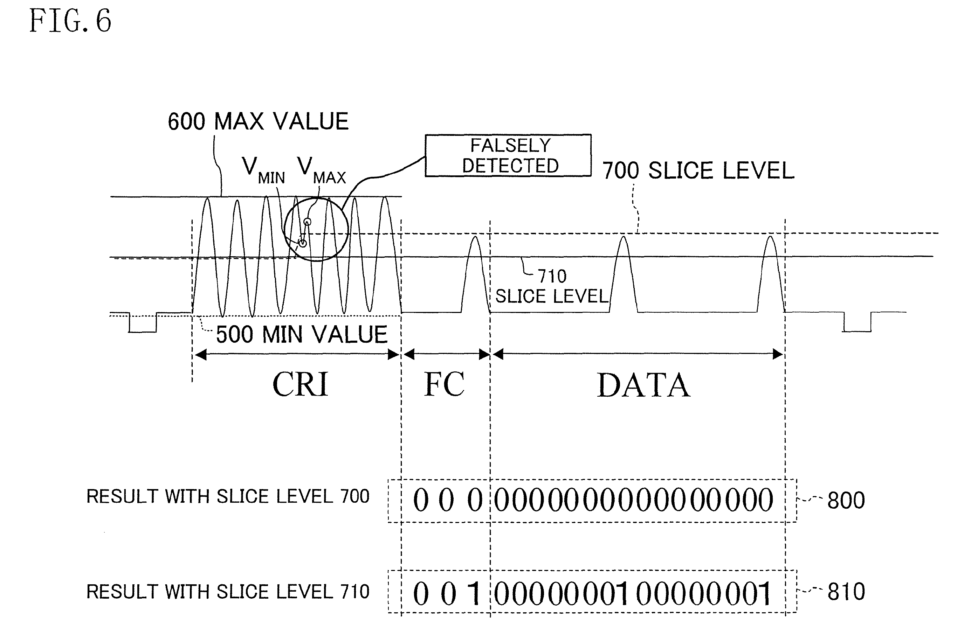

Figure **6** schematically shows how the VBI data is extracted in the VBI data slice circuit **550** according to the third example of the present invention.

For example, when the MIN value V_{MiN} and the MAX value V_{MAX} detected by the MIN detection unit **100** and the MAX detection unit **200** shown in Figure **5,** respectively, have a small difference in displacement (V_{MAX} - V_{MIN}), the amplitude judgment unit **1200** judges that these values are falsely detected and does not input them to the operation unit **300.**

If the difference in displacement (V_{MAX} - V_{MIN}) between the MIN and MAX values of the CRI amplitude is lower than the predetermined difference in displacement due to the influence of the ghost, the MIN and MAX values are judged as falsely detected values and they are not used for the operation of the slice level **710.** In the conventional VBI data slice circuit shown in Figure **14,** the MIN value V_{MIN} and the MAX value V_{MAX}, which are judged as the falsely detected values in the present example, are used for the operation of the slice level **700.** Therefore, the slice level **700** of the conventional VBI data slice circuit becomes too high and the VBI data **800** is falsely extracted. In contrast, according to the VBI data slice circuit **550** of the present example, the amplitude judgment unit **1200** makes a judgment whether or not the MIN and MAX values are usable for the operation of the slice level **710.** Thus, the VBI data **810** is properly extracted.

According to the VBI data slice circuit of the present example described above, when the difference in displacement between the MIN and MAX values used to set the slice level is lower than the predetermined difference in displacement, the amplitude judgment unit **1200** judges that the MIN and MAX values are falsely detected values which are not usable for the slice level operation and sets the average value of the proper MIN and MAX values as the slice level. Therefore, even if the CRI amplitude becomes irregular due to the ghost or the like, the slice level is suitably determined and the VBI data is properly extracted.

In the present example, whether or not the MIN and MAX values are usable to set the slice level **710** is judged from the difference in displacement between the MIN value detected by the MIN detection unit **100** and the MAX value detected by the MAX detection unit **200.** However, the judgment may be made on an optional criterion as a matter of course.

### (Fourth Example)

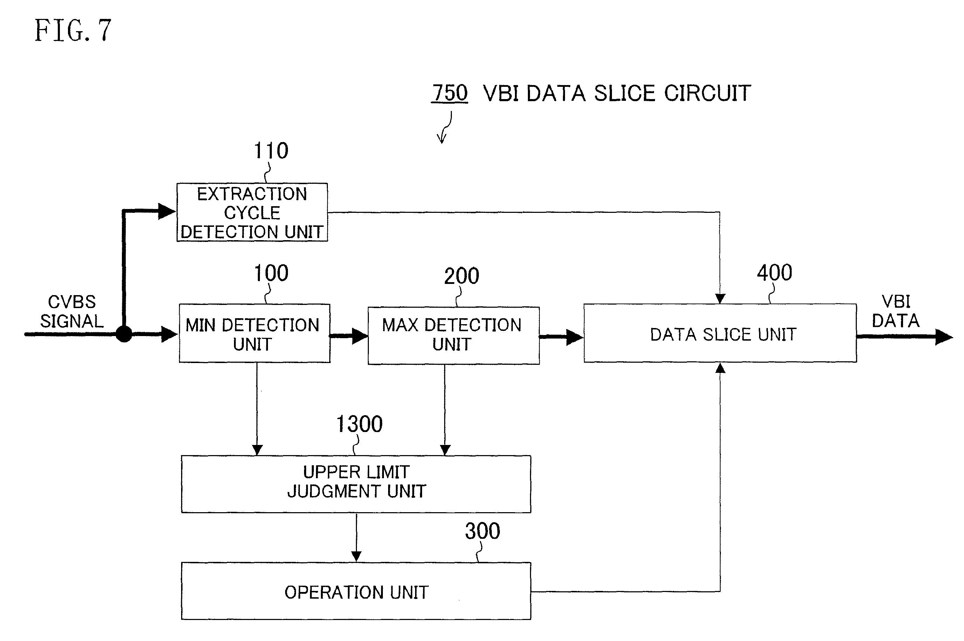

Figure 7 is a block diagram illustrating the entire configuration of a VBI data slice circuit according to a fourth example of the present invention.

Referring to the diagram, a VBI data slice circuit **750** includes a MIN detection unit **100,** an extraction cycle detection unit **110,** a MAX detection unit **200,** an operation unit **300,** a data slice unit **400** and an upper limit judgment unit **1300.** Detailed explanation of the components other than the upper limit judgment unit **1300** is omitted because their configurations are the same as those of the prior art shown in Figure **14.**

When the MIN value detected by the MIN detection unit **100** or the MAX value detected by the MAX detection unit **200** does not fall within a predetermined range, the upper limit judgment unit **1300** does not allow the input of the MIN or MAX value and the corresponding MAX or MIN value. If the upper limit judgment unit **1300** judges that the MIN and MAX values fall within the predetermined range, the MIN and MAX values are input to the operation unit **300** and an operation to obtain an average value of them is performed.

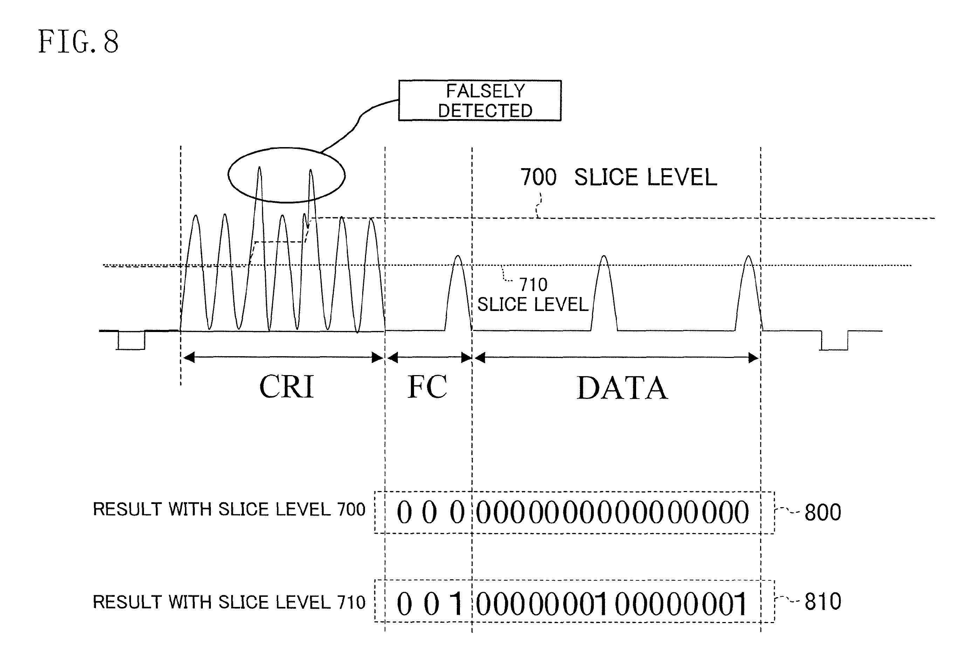

Figure **8** is a schematic diagram illustrating how the VBI data is extracted in the VBI data slice circuit **750** according to the fourth example of the present invention.

The MIN detection unit **100** and the MAX detection unit **200** shown in Figure 7 detect the MIN and MAX values of the CRI amplitude, respectively. The upper limit judgment unit **1300** makes a judgment whether or not the MIN and MAX values are within the predetermined range. If the detected value does not fall within the predetermined range due to the influence of the noise or the like, the upper limit judgment unit **1300** judges that the MIN or MAX value and the corresponding MAX or MIN value is falsely detected and does not allow the input of the falsely detected value to the operation unit **300.** In the operation unit **300,** an operation to obtain the slice level **710** is performed based on the average value of the MIN and MAX values within the predetermined range. In the conventional VBI data slice circuit shown in Figure **14,** the MIN and MAX values which are judged as the falsely detected values in the present example are used for the operation of the slice level **700.** Therefore, the slice level **700** of the conventional VBI data slice circuit becomes too high and the VBI data **800** is falsely extracted. In contrast, the VBI data slice circuit **750** of the present example makes it possible to properly extract the VBI data **810** based on the slice level **710.**

According to the VBI data slice circuit **750** of the present example described above, when the detected MIN and MAX values do not fall within the predetermined range, the upper limit judgment unit **1300** judges that the MIN and MAX values are falsely detected values which are not usable for the slice level operation and sets the average value of the MIN and MAX values within the predetermined range as the slice level. Therefore, even if the CRI amplitude becomes irregular due to the noise or the like, the slice level is suitably determined and the VBI data is properly extracted.

### (Fifth Example)

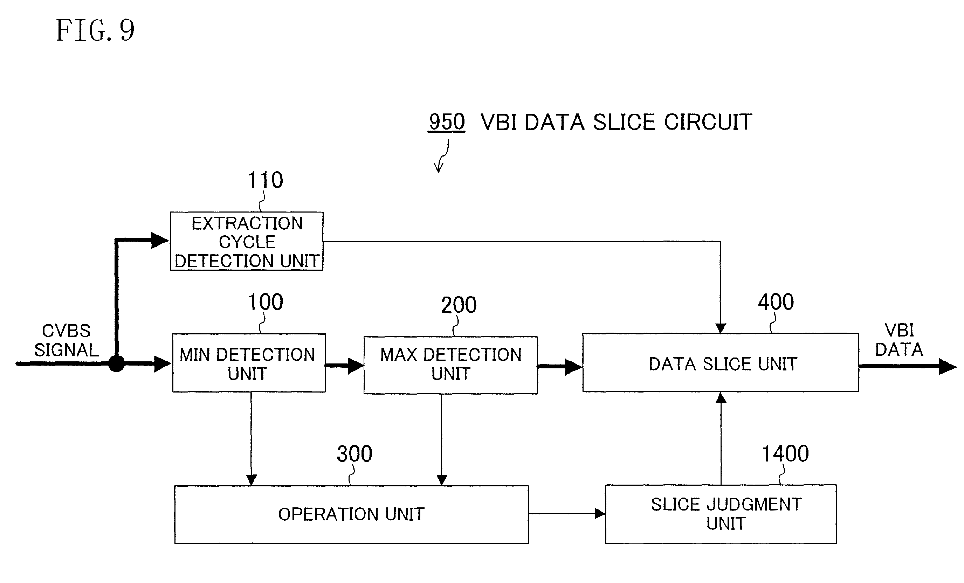

Figure **9** is a block diagram illustrating the entire configuration of a VBI data slice circuit according to a fifth example of the present invention.

Referring to the diagram, a VBI data slice circuit **950** includes a MIN detection unit **100,** an extraction cycle detection unit **110,** a MAX detection unit **200,** an operation unit **300,** a data slice unit **400** and a slice judgment unit **1400.** Detailed explanation of the components other than the slice judgment unit **1400** is omitted because their configurations are the same as those of the prior art shown in Figure **14.**

The slice judgment unit **1400** makes a judgment whether or not the average value obtained in the operation unit **300** from the MIN value detected by the MIN detection unit **100** and the MAX value detected by the MAX detection unit **200** is usable as the slice level. When the average value is not judged as being usable, a predetermined reference value is input to the data slice unit **400** and used as the slice level. The data slice unit **400** executes the extraction of the VBI data from the CVBS signal using the reference value as the slice level.

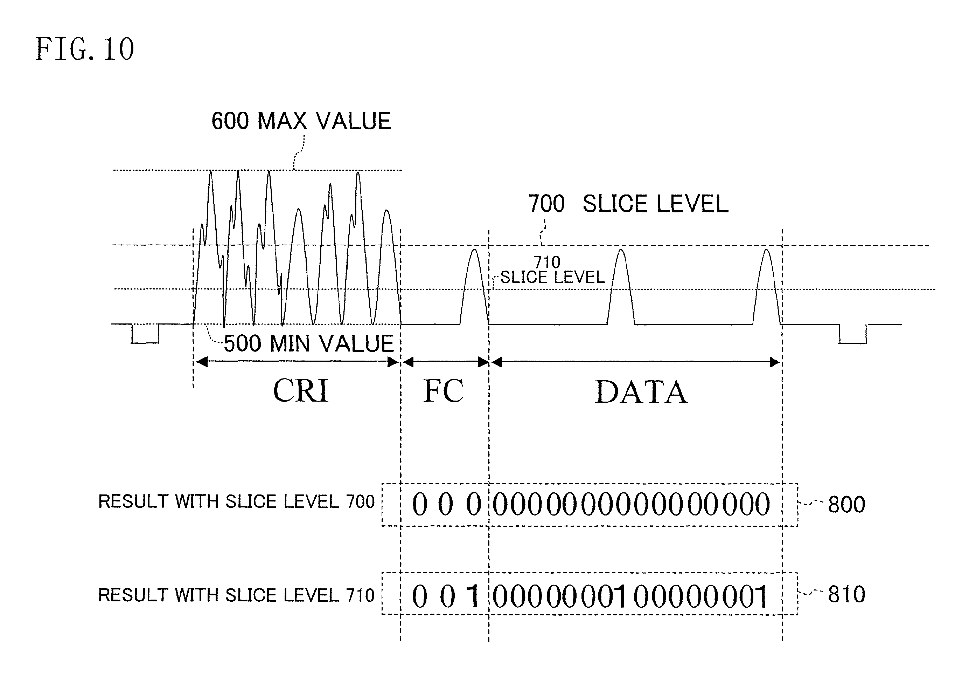

Figure **10** is a schematic diagram illustrating how the VBI data is extracted in the VBI data slice circuit **950** according to the fifth example of the present invention.

For example, when the MIN value **500** and the MAX value **600** are detected, the conventional VBI data slice circuit shown in Figure **14** utilizes an average value of the MIN value **500** and the MAX value **600** as the slice level **700** to extract the VBI data **800.** In the VBI data slice circuit **950** of the present example, the slice judgment unit **1400** makes a judgment whether or not the average value of the MIN value **500** and the MAX value **600** is usable as the slice level. When the average value is not judged as being usable, a predetermined reference value is used as the slice level **710** to extract the VBI data **810.**

If the MIN and MAX values of the amplitude in the CRI become irregular due to the ghost, the conventional slice level **700** cannot be appropriate and the VBI data is not properly extracted. However, according to the present invention, a judgment is made as to whether or not the average value of the MIN and MAX values is usable as the slice level. When the average value is not judged as being usable, the average value obtained in the operation unit **300** is not used as the slice level, but a predetermined reference value is used as the slice level **710** to extract the VBI data. Thus, the VBI data **810** is properly extracted.

According to the VBI data slice circuit **950** of the present example described above, the slice level is suitably determined and the VBI data is properly extracted even if the amplitude in the CRI becomes irregular due to the noise or the like.

### (Sixth Example)

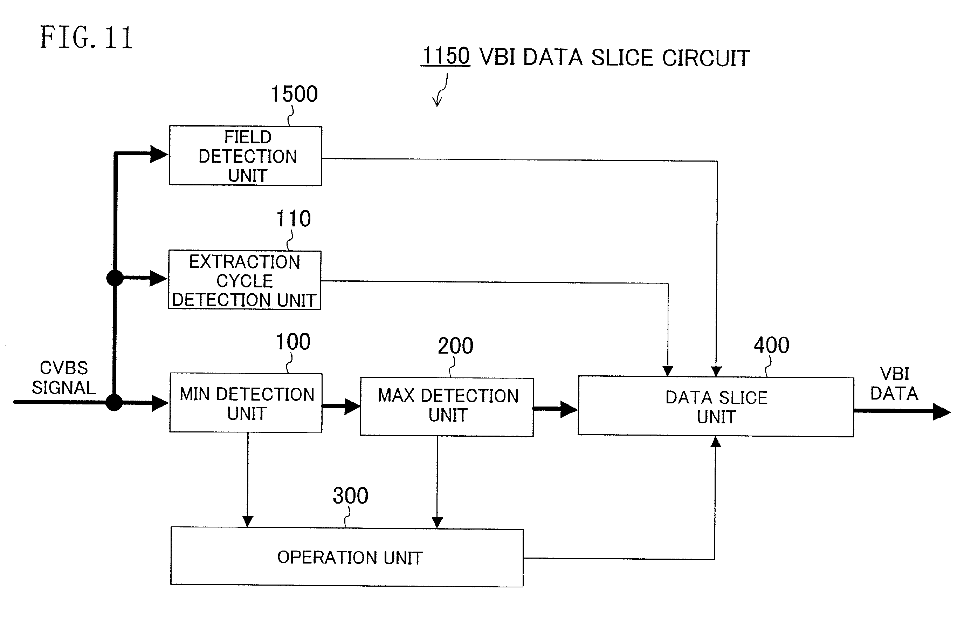

Figure **11** is a block diagram illustrating the entire configuration of a VBI data slice circuit according to a sixth example of the present invention.

Referring to the diagram, a VBI data slice circuit **1150** includes a MIN detection unit **100,** an extraction cycle detection unit **110,** a MAX detection unit **200,** an operation unit **300,** a data slice unit **400** and a field detection unit **1500.** Detailed expression of the components other than the field detection unit **1500** is omitted because their configurations are the same as those of the prior art shown in Figure **14.**

The field detection unit **1500** detects an odd number field and an even number field of the CVBS signal and inputs the detection result to the data slice unit **400.** The data slice unit **400** extracts the VBI data from every field of the CVBS signal based on the detection result.

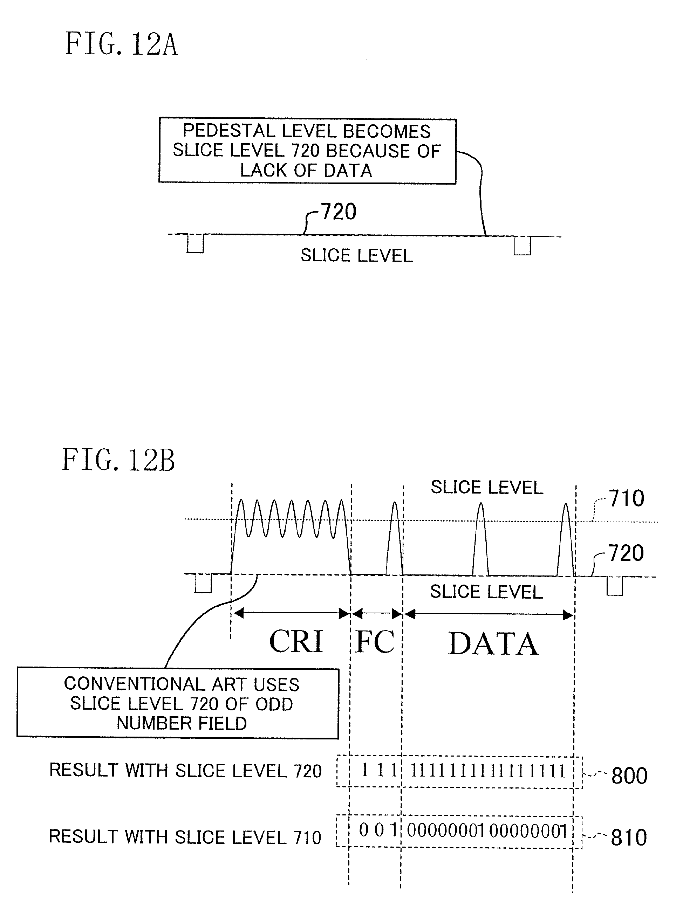

Figures **12A** and **12B** show how the VBI data is extracted in the VBI data slice circuit **1150** according to the sixth example of the present invention. Figure **12A** shows the odd number field of the CVBS signal and Figure **12B** shows the even number field of the CVBS signal.

As shown in Figure **12A,** data such as CRI is not superimposed on the odd number field of the CVBS signal. Therefore, a slice level **720** is set identical to the pedestal level.

Referring to Figure **12B,** the field detection unit **1500** shown in Figure **11** detects the odd and even number fields of the CVBS signal. Then, the VBI data of the odd number field is extracted using the slice level **720** obtained by an operation based on the odd number field data, while the VBI data of the even number field is extracted using the slice level **710** obtained by an operation based on the even number field data. Therefore, the VBI data **810** is properly extracted.

In the conventional VBI data slice circuit shown in Figure **14,** the slice level **720** determined by the odd number field data is also used for the extraction of the VBI data of the even number field. Therefore, the VBI data **800** is falsely extracted.

According to the VBI data slice circuit **1150** of the present example described above, the odd and even number fields are detected by the field detection unit **1500** and the slice levels are determined separately for different fields. Therefore, even if the data superimposed on the odd and even number fields have different amplitudes, the slice level is suitably determined and the VBI data is properly extracted.

## Claims

1. A VBI data slice circuit for extracting VBI data superimposed on a VBI of a CVBS signal based on a slice level, the VBI data slice circuit comprising:
an extraction cycle detection unit for detecting an extraction cycle of the VBI data from the CVBS signal;
a pedestal level detection unit for detecting a pedestal level value of the CVBS signal;
a MAX detection unit for detecting a maximum value of an amplitude of the CVBS signal;
an operation unit for performing an operation to obtain the slice level for the VBI data based on the pedestal level value detected by the pedestal level detection unit and the maximum value of the amplitude detected by the MAX detection unit; and
a data slice unit for extracting the VBI data from the CVBS signal based on the extraction cycle detected by the extraction cycle detection unit and the slice level obtained by the operation unit.

2. A VBI data slice circuit for extracting VBI data superimposed on a VBI of a CVBS signal based on a slice level, the VBI data slice circuit comprising:
a pedestal level detection unit for detecting a pedestal level value of the CVBS signal;
a MAX detection unit for detecting a maximum value of an amplitude of the CVBS signal;
a MAX cycle detection unit for detecting an extraction cycle of the VBI data from a detection cycle of the maximum value of the amplitude detected by the MAX detection unit;
an operation unit for performing an operation to obtain the slice level for the VBI data based on the pedestal level value detected by the pedestal level detection unit and the maximum value of the amplitude detected by the MAX detection unit; and
a data slice unit for extracting the VBI data from the CVBS signal based on the extraction cycle detected by the MAX cycle detection unit and the slice level obtained by the operation unit.

3. A VBI data slice circuit for extracting VBI data superimposed on a VBI of a CVBS signal based on a slice level, the VBI data slice circuit comprising:
an extraction cycle detection unit for detecting an extraction cycle of the VBI data from the CVBS signal;
a MIN detection unit for detecting a minimum value of an amplitude of the CVBS signal;
a MAX detection unit for detecting a maximum value of the amplitude of the CVBS signal;
an amplitude judgment unit for judging whether or not the minimum value of the amplitude detected by the MIN detection unit and the maximum value of the amplitude detected by the MAX detection unit are useable for an operation to obtain the slice level;
an operation unit for performing the operation to obtain the slice level for the VBI data based on the minimum and maximum values of the amplitude which are judged as being usable for the operation to obtain the slice level; and
a data slice unit for extracting the VBI data from the CVBS signal based on the extraction cycle detected by the extraction cycle detection unit and the slice level obtained by the operation unit.
